(19) Europäisches Patentamt
European Patent Office
Office européen des brevets

(11) **EP 4 056 985 A1**

(12) **EUROPEAN PATENT APPLICATION**

(43) Date of publication:
**14.09.2022 Bulletin 2022/37**

(21) Application number: **21161386.4**

(22) Date of filing: **08.03.2021**

(51) International Patent Classification (IPC):
**G01N 3/34** *(2006.01)*     **G01N 3/317** *(2006.01)*
**G01N 29/04** *(2006.01)*     **G01N 29/22** *(2006.01)*

(52) Cooperative Patent Classification (CPC):
**G01N 3/30; G01N 3/34; G01N 29/045;**
**G01N 29/4454; G01N 29/46;** G01N 2203/0039;
G01N 2203/005; G01N 2291/0426

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GrindoSonic BV**
**3001 Leuven (BE)**

(72) Inventor: **VAN DEN BOSSCHE, Alex**
**3040 Neerijse (BE)**

(74) Representative: **IPLodge bv**
**Technologielaan 9**
**3001 Heverlee (BE)**

(54) **IMPROVED SUPPORT FOR IMPACT MEASUREMENTS**

(57) The present invention relates to an impact excitation measurement system comprising a testing chamber, an impactor, a sensor system and a support system, wherein the impactor is configured to provide an impact to a test piece supported by the support system at said predetermined height, wherein the sensor system is configured to obtain a vibrational response of the test piece to an impact provided to the test piece by the impactor, wherein the support system is configured to support a solid test piece at a predetermined height within the testing chamber, wherein the support system comprises a set of support bars (needles) which are made of a thermally stable material, the set of support bars comprising at least three support bars each having a support end, which three support ends are positioned non-collinearly.

Fig. 3

EP 4 056 985 A1

**Description**

**Technical field**

The present invention relates to a non-destructive method and system for performing measurements on a solid test piece using an impact excitation technique. The present invention is particularly useful for performing tests on the test piece at different temperatures. The measurements are useful for detecting defects and anomalies in solids, and characterizing the E-modulus, G-modulus, Poisson's constant and damping parameters.

**Background**

Testing of solids can be done in a number of ways. A first test usually consists of a visual inspection to see if a solid has the right size and shape, and to check for surface defects. However, in many cases the properties of the solid depend largely on internal structure, which can be invisible. For instance, the strength of metals and alloys depends largely on certain types and amount of bulk defects. These defects can be both small and large, and could occur because of natural causes, because of the manner of production, because of wear and tear, because of accidents, etc.

Independent of how the defects occur, it is in some cases important to know the state of a solid with respect to its defects. In order to analyse a solid for defects, one can use an invasive method or a non-invasive method on a test piece of the solid. A non-invasive method hereby allows analysis without destroying or altering the test piece. Hence, non-invasive methods are typically used for test pieces which still need to be used later, or which need to undergo further tests (which could themselves be invasive or non-invasive).

One type of non-invasive testing method for solids uses vibrations to analyse the test piece. Hereby the test piece is subjected to controlled vibrations which can propagate through the solid, hereby being transmitted, reflected or absorbed. The controlled vibrations may be induced with an impact excitation technique (IET), whereby the test piece is positioned in such a way that it can vibrate substantially unhindered upon being impacted. In impulse excitation techniques, the material properties of test piece are then determined by impacting the sample with a dedicated tool or projectile, and analysing the resulting vibrations as they are picked up with a vibration signal measurement sensor, such as a piezoelectric sensor, a microphone, a laser vibrometer or an accelerometer. Vibrations through solid are also referred to as sound or as sound waves and the measurements are also referred to as acoustic measurements. A vibration signal measurement sensor is therefor also termed "acoustic sensor" in the context of this application.

An apparatus for testing a solid using sound has been described in international application WO 2019/020825 A1. This document discloses an apparatus for analysing a mechanical vibratory response of a solid material sample, the apparatus comprising: an array of impactors arranged to impart an impact on respective well-defined points on the surface of said solid material sample; a sensor configured to capture said mechanical vibratory response as a time-varying signal, subsequent to an impact of said at least one impactor; and processing means configured to analyse said time-varying signal to determine the frequencies and decay constants of sinusoids making up said time-varying signal. The invention also pertains to a corresponding method of characterizing a solid material sample.

The analysis of the response of the solid test piece to vibrational excitations typically involves the extraction of one or more, and preferably all, of the following parameters:

- Young's modulus (E), which is indicative of the test piece's tensile elasticity;
- the shear modulus (G), which is indicative of the test piece's response to shear stress;
- Poisson's ratio (v), which is indicative of the test piece's deformation in directions orthogonal to an applied uniaxial stress;
- Damping or attenuation of the signal caused by internal friction

These properties typically depend on the frequency or frequency range of the vibrational excitation. Hereby, the test piece may have a number of resonance frequencies, which depend on the different vibrational modes of the test piece. Important modes are hereby the bending mode and the torsion mode. The parameter values at these resonance frequencies are important numbers for describing the state of the test piece.

In many applications, solid components, e.g. in machinery, are used at different temperatures. The operation temperature can hereby fluctuate quickly and/or over a wide temperature range. For instance, brake discs in vehicles can heat up considerably and fast during operation (from basically environmental temperature to more than 500°C in a matter of seconds). Another example is injection nozzles of kerosene for the jets of an airplane, which could heat up to more than 1500 °C during operation. The high temperature range may considerably affect the material properties of the component, and in particular the elastic properties such as the abovementioned Young's modulus, shear modulus and Poisson's ratio. For instance, it can generally be expected that a solid becomes more flexible at higher temperature due to a weakening of the internal bonds on average, which basically means that one expects E and G to decrease gradually with increasing temperature.

At different temperatures, solid components may have different material properties. This can affect the component's functioning. It is important to find out at which temperatures or temperature ranges the component's normal or intended functioning is hindered. This can be due to bulk properties of the material, defects which can be induced by altering the temperature, defects which may become more important at higher temperature, variability of expansion different parts of the component, etc. Concrete examples of the temperature-dependence of the component's material properties are:

- general change of elasticity properties, which make the component less rigid, thereby hindering its proper functioning, for instance a brake disc may become too elastic at high temperature to allow proper braking,
- a phase transition at a certain temperature or within a certain temperature range could seriously change the component's material properties,
- a chemical reaction could equally alter the component's material properties,
- precipitations of a stoichiometric different phase, e.g. in an alloy, could be present in a material due to for instance a faulty production method, and lead to an internal material boundary between materials having different temperature-dependent expansion. Clearly this could lead to severe problems,
- laminates or other layered components, whereby the adhesion of one layer to the next could degrade at increased temperature.

In order to test for the proper functioning of solid components at different temperatures and/or throughout the full temperature range of intended operation, the material properties of a test piece need to be measured at different temperatures. Hereby, the test piece could for instance be the full component, part of the component, or a piece of the same material of the component. Testing is preferably done in a controlled environment allowing control over at least the temperature. At different temperatures, the material properties are then measured.

The inventors have found that measuring the material properties of a test piece over a wide temperature range, which could span from less than -50°C to more than 2000 °C, can be very difficult in practice. Creating a temperature controlled environment for such a temperature range typically requires an oven which may comprise a number of vibration-producing components. Clearly, the background vibrations created by the oven can interfere with the measurement process. These background vibrations typically worsen at higher temperatures. Furthermore, since one may expect some material properties (e.g. E and G) to decrease with increasing temperature, the signal will also decrease. Both effects will lead to a lower signal-to-noise (STN) ratio at high temperatures.

International application WO 2020/254698 A1 discloses a method for acoustically measuring material properties of a test piece at high temperatures, comprising the steps of: a. heating the test piece to within a testing temperature range; b. performing a background measurement within said testing temperature range by capturing a vibrational signal from the test piece within a calibration period, thereby obtaining a noise signal; c. performing an acoustic measurement on said test piece within said testing temperature range and within a testing period by: c1. imparting a vibrational excitation onto the test piece; c2. capturing a vibrational signal of the test piece within the testing period, thereby obtaining a vibrational response signal to said vibrational excitation, and d. obtaining the material properties of the test piece by analysing the vibrational response signal, thereby taking into account the noise signal. The document also discloses a system for acoustically measuring material properties of a test piece at high temperatures.

Although the above prior art document discloses a method and system for obtaining an acoustic response to an impact at different temperatures, the inventors have found that accuracy may still be improved, in particular for tests performed at different temperatures.

The present invention aims to solve the problem of a worsening STN ratio for acoustic measurements on test pieces at high temperatures and to obtain more precise damping measurement results at any temperature. Furthermore, the present invention presents a novel and inventive support system for supporting a test piece within a testing chamber, the support system being capable of supporting the test piece at different temperatures in a stable and error-reducing manner.

**Summary of the invention**

The present invention concerns an impact excitation measurement system comprising a testing chamber, an impactor, a sensor system and a support system. The testing chamber is preferably a heating chamber comprising a temperature control system configured to control the temperature in the chamber. The support system is configured to support a solid test piece at a predetermined height within the testing chamber. The impactor is configured to provide an impact to a test piece supported by the support system at said predetermined height. The sensor system is configured to obtain a vibrational response of the test piece to an impact provided to the test piece by the impactor.

The inventors have found that the accuracy of the measurements which have been obtained with existing support systems may be improved. Hereby, the inventors have noticed that accuracy may depend on the temperature and have found that thermal expansion of the support system plays a significant role in obtaining accurate measurements. This effect is particularly pronounced if the temperature interval over which the measurements are performed, is large. Therefore, the support system of the system of the present invention comprises a set of support bars which are made of, and preferably entirely consist of, a thermally stable material. Additionally or alternatively, the support bars are made of, and preferably essentially entirely consist of, the same material as the impactor.

The term "thermally stable material" refers to a material which has a very small thermal expansion over a large temperature interval. Preferably, the material comprises a linear expansion coefficient of at most $10.0 \times 10^{-6}$ $K^{-1}$, more preferably at most $9.0 \times 10^{-6}$ $K^{-1}$, yet more preferably at most $8.0 \times 10^{-6}$ $K^{-1}$, still more preferably at most $7.0 \times 10^{-6}$ $K^{-1}$, even more preferably at most $6.0 \times 10^{-6}$ $K^{-1}$, yet even more preferably at most $5.0 \times 10^{-6}$ $K^{-1}$, still even more preferably at most $4.0 \times 10^{-6}$ $K^{-1}$, most preferably at most $3.0 \times 10^{-6}$ $K^{-1}$. Preferably, the materials comprises such low thermal expansion over the full range of the temperature interval over which the measurements are performed.

The support bars preferably comprise a support end onto which the piece can be supported, said support end comprising a point-like shape. The point-like shape of the support end ensure that the contact surface between the support end and the test piece is small, preferably smaller than 2 $mm^2$, more preferably smaller than 1.5 $mm^2$, still more preferably around 1 $mm^2$ or smaller. For instance the support end may preferably comprise a point-like shape which has the form of a spherical cap with a height (h) at most 3 mm, preferably between 2 mm and 3 mm, and a radius at the base of the cap (a) of at most 0.5 mm.

The set of support bars comprises at least three support bars each having a support end, which 3 support ends are positioned non-collinearly. Three non-collinear support points tend to lead to a stable support. In fact, in a preferred embodiment, the set of support bars comprises exactly three support bars. In other preferred embodiments, the set of support bars comprises exactly four support bars, at least three of which have non-collinearly positioned support ends. Hereby, the three non-collinear support points preferably define an essentially horizontal support plane onto which the test can be supported. This is particularly preferred if the test piece comprises an essentially flat base surface. It should be noted here that a test piece may typically comprise a beam-like shape.

The present invention also concerns a kit comprising an impact excitation measurement system as described here above and further in this document, and at least one test piece, wherein the test piece comprises a base surface, the base surface comprising a set of at least three non-collinear depressions, whereby the at least three non-collinear depressions are positioned in correspondence with the non-collinear support ends of the at least three support bars. Preferably the depressions are each positioned on a node of the test piece for a predetermined vibrational mode of the test piece.

The present invention also concerns a method for acoustically measuring material properties of a test piece, preferably at one or more temperatures, comprising the steps of:

   a. placing a test piece on the support system in a testing chamber of a system according to the present invention, and preferably heating the test piece to within a testing temperature range;
   b. preferably performing a background measurement, preferably within said testing temperature range, by capturing a vibrational signal from the test piece within a calibration period, thereby obtaining a noise signal;
   c. performing an acoustic measurement on said test piece, preferably within said testing temperature range, within a testing period by:

      c1. imparting a vibrational excitation onto the test piece;
      c2. capturing a vibrational signal of the test piece within the testing period, thereby obtaining a vibrational response signal to said vibrational excitation, and

   d. obtaining the material properties of the test piece by analysing the vibrational response signal, preferably thereby taking into account the noise signal.

**Summary of the figures**

   **Figure 1** shows the naming convention for describing a spherical cap.

   **Figures 2A and 2B** illustrate the positions of the nodes of vibrational nodes of a beam-shaped test piece.

   **Figure 3** illustrates a system according to the present invention.

**Figure 4** illustrates a method for measuring an acoustic response and for obtaining material properties from these measurements at different temperatures according to the present invention.

**Detailed description of the invention**

The present invention relates to an impact excitation measurement system as described above and further in this document, a kit comprising such an impact excitation measurement system and at least one test piece, and a method for acoustically measuring material properties of a test piece as described here above and further in this document.

The measurements which can be performed using the system or method of the present invention, are preferably performed over a temperature interval comprising a lower limit and an upper limit. This temperature interval preferably comprises a lower limit of at most 50°C, more preferably at most 30 °C, even more preferably at most 20°C, still more preferably at most 0°C, yet more preferably at most -18°C, yet even more preferably at most -80°C. A particularly preferred lower limit of the temperature interval is room temperature. The temperature interval preferably comprises an upper limit of at least 20°C, more preferably at least 50°C, still more preferably at least 100°C, even more preferably at least 200°C, still more preferably at least 400°C, yet even more preferably at least 600°C, still even more preferably at least 800°C, yet even more preferably at least 1000°C or higher, such as 1100°C, 1200°C, 1300°C, 1400°C, 1500°C and any value therebetween or above. The material of the support bars is preferably thermally stable over the temperature interval. In view of the large temperature interval, possibly between -80°C and 1500°C, the support bars are preferably made of a ceramic material or a glass-like material, such as glass, borosilicate, fluorphlogopite mica in a borosilicate glass matrix (e.g. Macor® which comprises 46 wt% silica ($SiO_2$), 17 wt% magnesium oxide (MgO), 16 wt% aluminium oxide ($Al_2O_3$), 10 wt% potassium oxide ($K_2O$), 7 wt% boron trioxide ($B_2O_3$), 4 wt% fluorine (F)), quartz, fused quartz, silicon carbide, silicon, a crystalline glass-ceramic (e.g. Sitall), a lithium-aluminosilicate glass-ceramic (e.g. Zerodur®).

Preferably the test piece comprises a predefined shape and/or predefined sizes. This makes it easier to perform measurements as it allows measuring on different test pieces with the same predefined shape and/or sizes, using the same support system.

Preferably the impactor is, or at least comprises, a mechanical impactor. The mechanical impactor may be actuated in a number of manners, such as for instance, mechanically or electromechanically. A mechanical impactor may be preferred since mechanical systems tend to be usable over wide temperature ranges.

Preferably the depressions are each positioned on a node of the test piece for a predetermined vibrational mode of the test piece. Hereby, preferably the support system comprises support bars having support ends, the positions of these support ends corresponding to the positions of the depressions in the test piece, i.e. the positions of the support ends preferably correspond to the location of the node of a vibrational mode of the test piece.

The use of three or more support bars with point-like shaped support points, which may also be termed "needles", greatly reduces the damping caused by the supports. Thus, a precise measurement can be made of the attenuation caused only by the internal friction in the sample under test, and essentially not disturbed by external friction originating in the supporting system. This makes the present invention also very beneficial for very basic, even manual excitation, room temperature impulse excitation measurements, or at any available temperature.

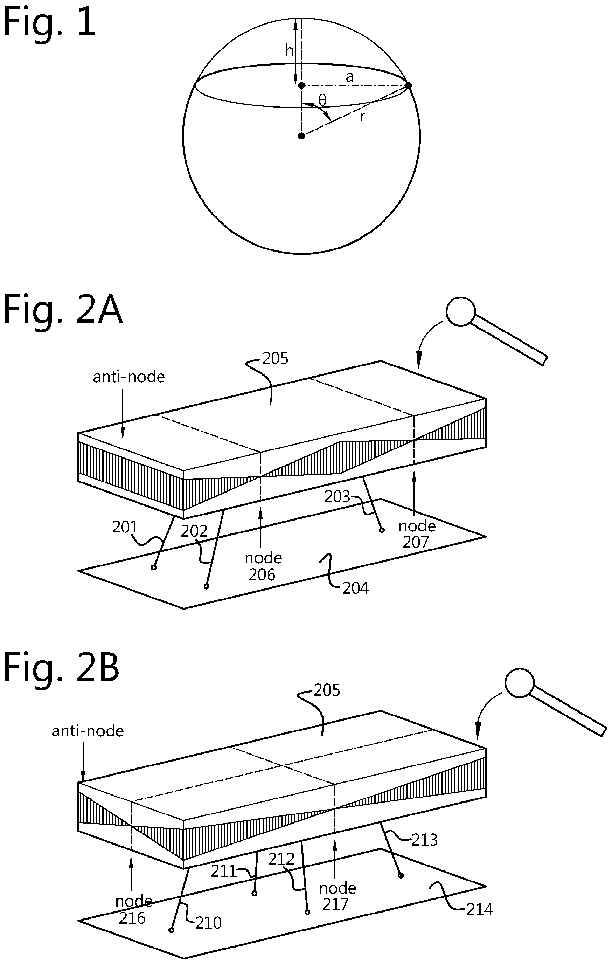

This is illustrated in figures 2A and 2B. Figure 2A illustrates the positions of two nodes (dashed lines) of a bending mode on a beam-shaped test piece. This means that when an impact is given to the test piece, preferably the impact provided at the position of an antinode of the bending mode, the test piece may vibrate mainly according to this bending mode. Hereby the amplitude of the bending mode vibration at the position of the nodes vanishes or is at least very small in the center-of-mass frame of the test piece. This means that if the test piece is supported at the position of the nodes, it will be supported during the full test. If the support would be positioned on a random location, the test piece could tend to jump up from the support points due to the non-zero amplitude of the vibration at the support locations. Furthermore, positioning the support ends on the nodes of the bending mode further ensures that the bending mode vibration is dampened much less (essentially not damped) than other modes, allowing to increase signal-to-noise ratio's for the bending mode vibrational response. This also results in a very accurate measurement of the bending mode damping. The present invention relates to a support system comprising a set of support bars. In fig. 2A, the support system comprises exactly three support bars (201, 202, 203), which can be fixed on a support plate (204), each support bar comprising a support end in contact with the test piece (205) and supporting said test piece. The support ends of two support bars (201, 202) support the test piece in a first node (206), while the support end of the third support bar (203) supports the test piece in a second node (207). For the bending mode, this means that the three support ends are positioned non-collinearly and thereby define a stable support plane for the test piece. The eigenfrequency $f_f$ of this bending vibration mode is indicative of the sample's dynamic Young's modulus E. For the illustrated beam with mass m, length L, width b, and thickness t, one may use the following relation:

$$E = 0.9465 \left(\frac{mf_f^2}{b}\right)\left(\frac{L^3}{t^3}\right) T$$

with the correction factor T defined as

$$T = 1 + 6.585 \left(\frac{t}{L}\right)^2 \text{ if } L/t \geq 20.$$

Figure 2B illustrates the positions of two nodes (dashed lines) of a torsional mode on a beam-shaped test piece. This means that when an impact is given to the test piece, preferably the impact provided at the position of an antinode of the torsional mode, the test piece may vibrate mainly according to this torsional mode. Hereby the amplitude of the torsional mode vibration at the position of the nodes vanishes or is at least very small in the center-of-mass frame of the test piece. This means that if the test piece is supported at the position of the nodes, it will be supported during the full test. If the support would be positioned on a random location, the test piece could tend to jump up from the support points due to the non-zero amplitude of the vibration at the support locations. Furthermore, positioning the support ends on the nodes of the torsional mode further ensures that the torsional mode vibration is dampened much less than other modes, allowing to increase signal-to-noise ratio's for the torsional mode vibrational response and resulting in a very accurate measurement of the damping of this mode. The present invention relates to a support system comprising a set of support bars. In fig. 2B, the support system comprises exactly four support bars (210, 211, 212, 213), which can be fixed on a support plate (214), each support bar comprising a support end in contact with the test piece (205) and supporting said test piece. The support ends of two support bars (210, 213) support the test piece in a first node (216), while the support end of the third and fourth support bar (211, 212) supports the test piece in a second node (217). For the torsional mode, this means that the each subset of three support ends are positioned non-collinearly. Note that in general exactly three non-collinearly positioned support ends could be preferred, because they automatically and unambiguously define a support plane, whereas additional support bars may lead to at least one support end not making contact with the test piece. Nevertheless, for certain modes, such as the torsional mode illustrated in fig. 2B by its nodes, it may be more stable to use four support bars. This occurs typically for modes having nodes that intersect in the middle of the test piece.

The eigenfrequency $f_t$ of this torsional vibration mode is indicative of the sample's shear modulus. For the illustrated beam with mass m, length L, width b, and thickness t, one may use the following relation:

$$G = \frac{4Lmf_t^2}{bt} R$$

with the correction factor R defined as

$$T = \left[\frac{1+\left(\frac{b}{t}\right)^2}{4-2.521\frac{t}{b}\left(1-\frac{1.991}{e^{\pi\frac{b}{t}}+1}\right)}\right]\left[1 + \frac{0.00851b^2}{L^2}\right] - 0.060 \left(\frac{b}{L}\right)^{\frac{3}{2}} \left(\frac{b}{t}-1\right)^2.$$

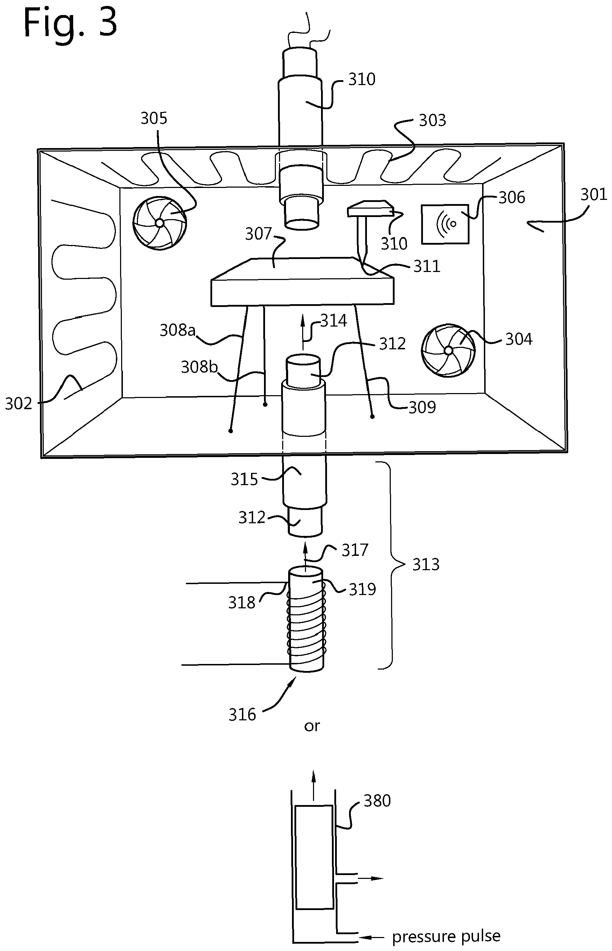

Figure 3 illustrates a system according to the present invention. The figure shows a heating chamber (301) comprising a set of heating elements (302, 303, 304, 305, 306) capable of bringing the heating chamber and/or the test piece to a desired temperature or desired temperature range. Heating elements (302, 303) may be attached to a heating chamber wall and provide heat thereto, e.g. by heat exchange with a high pressure fluid at high temperature, by electrical resistance heating, by magnetic induction, etc. The heat of these wall-heating elements can be distributed into the heating chamber, e.g. by ventilators (304, 305). The ventilators (304, 305) may also be arranged to provide a warm fluid such as heated air or steam, to the heating chamber. A heating element may also comprise a radiative heating element, such as a microwave element (306). The heating chamber preferably also comprises one or more thermometers for measuring the actual temperature in the heating chamber and/or of the test piece, and preferably also comprises a control circuit arranged for controlling the temperature of the test piece and/or the heating chamber.

The test piece (307) is suspended by a support structure comprising a set of support bars (308a, 308b, 309) which allows the test piece to vibrate as freely as possible, preferably by supporting at the location of vibrational nodes of the test piece. The support bars are preferably essentially needle-shaped, and have non-collinearly positioned support ends which preferably have a small contact surface with the test piece. Optionally very small indents in the sample can be made to avoid the sample to vibrate away during a long measurement cycle with many impulses given to the test piece. Those indents should be very small, by preference less than 1/100000 of the mass of the sample, in order not to influence the material dynamic properties. An acoustic sensor (310), or multiple acoustic sensors, which may comprise a microphone or a laser-interferometer, can be brought into contact (311) with the test piece, preferably at a well-defined location, or a waveguide tube can be used for guiding the acoustic response to an acoustic sensor, preferably one end of the waveguide being brought nearby or in direct contact with the test piece in the heating chamber and another end preferably being located outside of the heating chamber. The latter embodiment allows the place the sensor outside of the heating chamber.

In a preferred embodiment, the acoustic sensor comprises a laser interferometer. A laser interferometer is particularly useful for measurements in vacuum, and allows contactless measurements. Alternatively or additionally, the acoustic sensor may comprise an ultrasonic measurement sensor and/or a time-of-flight sensor and/or a Doppler-based sensor, for instance as described in:

- S-R.Huang, R.M.Lerner, K.J.Parker, "Time domain Doppler estimators of the amplitude of vibrating targets", .J. Acous. Soc. Am., 91(2), 965-974 (1992);

- J.Tapson, "High precision, short range ultrasonic sensing by means of resonance mode-locking", Ultrasonics, 33, 6, 441-444 (1995)), and in

- R.Kazys, R. Sliteris, L. Mazeika, "Ultrasonic technique for Vibration Measurements", Proceedings of the 15th World Conference on Non-Destructive Testing, 15-21 October 2000 in Rome, https://www.ndt.net/article/wcndt00/papers/idn246/idn246.htm .

Also these types of sensor may be used for contactless measurements.

In an embodiment, the method of the present invention is performed whereby the heating chamber comprises a pressure which is lower than the atmospheric pressure, preferably 0.5 bar or less, more preferably 0.2 bar or less, most preferably essentially a vacuum pressure. Hereby, preferably a laser interferometer is used to allow contactless vibrational measurement at low to zero pressure. Measurements at reduced to zero pressure dampen surrounding noises, thereby increasing the signal-to-noise ratio.

The impactor preferably comprises a ballistic impactor (312) which can be provided with an impulse by an impactor actuator (313). The ballistic impactor (312) is preferably a ceramic rod which can withstand high temperatures and whose properties do not change considerably with temperature, i.e. the impactor preferably essentially consists of a thermally stable ceramic material. It can be shot upwards (314) towards the test piece using the impactor actuator (313), which comprises:

- a guiding tube (315) through the bottom of the heating chamber, for guiding the ballistic impactor along a preferably vertical direction;

- an electromechanically operated hammer (316) arranged to impart a, preferably vertical, impulse (317) to the impactor (312). The hammer (316) may comprise an electrical coil (318) and a movable rod or bullet (319) which can move depending on the electrical current flowing through the coil (318). An example of such a system is presented in US patent 6,782,970 B2, whereby in the present invention the bullet of the impactor actuator imparts an impulse to the ceramic impactor (312) rather than directly to the test piece. Alternatively, a pressure-driven impactor or a pressure-driven impact actuator (380) for imparting an impulse to the impactor may be used.

Preferably the support bars are made from the same material as the impactor and/or the guiding tube. Preferably hereby, the support bars essentially consist of a thermally stable ceramic material.

In an embodiment of the method of the present invention, the step b of performing a background measurement within said testing temperature range by capturing a vibrational signal from the test piece within a calibration period, thereby obtaining a noise signal, is preferably performed. Taking into account the background noise of the environment when performing the analysis of the vibrational response, leads to a better determination of the material properties. Further, by taking the background noise into account in the same testing temperature range as for the acoustic measurement, the inventors have found that a much better analysis of the vibrational response can be performed. This is because the noise can be highly dependent on the temperature range due to e.g. heating elements, ventilators or any other equipment or equipment components used to perform the measurement, each of which could behave differently in different temperature ranges.

The inventors have further found that the best results are achieved if the background measurement is performed by doing all the steps of the acoustic measurement, with the exception of imparting the vibrational excitation onto the test piece. Hence, in a preferred embodiment, step b of performing the background measurement comprises performing all the steps of step c of performing the acoustic measurement, with the exception of step c1 of imparting the vibrational excitation onto the test piece. This applies to the above described method as well as to all embodiments of the method which are described later in this document and in the claims.

In a preferred embodiment, the testing chamber of the impact excitation measurement system of the present invention comprises a heating element for bringing the test piece within a testing temperature range.

In a preferred embodiment, the impact excitation measurement system comprises an impactor actuator, for actuating the impactor when imparting a vibrational excitation onto a test piece located in the testing chamber.

In a preferred embodiment, the impact excitation measurement system comprises a control system in connection with the testing chamber, the sensor and the impactor, the control system configured to:

- optionally instruct the testing chamber to bring the test piece within a testing temperature range;
- during a testing period, instruct the impact system to actuate the impactor with the impactor actuator such that a vibrational excitation is mechanically imparted by the impactor onto a test piece located in the heating chamber, and obtain from the sensor a vibrational response signal to said vibrational excitation,
- optionally during a calibration period, instruct the impact system to actuate the impactor with the impactor actuator such that the impactor does not mechanically impart a vibrational excitation onto the test piece located in the heating chamber, and obtain from the sensor a noise signal, and
- obtain the material properties of the test piece by analysing the vibrational response signal, preferably thereby taking into account the noise signal.

In a further aspect, the present invention concerns a thermal expansion measurement method for obtaining a thermal expansion parameter of a test piece. This thermal expansion measurement method comprises the steps of:

- extracting at least two resonance frequencies from experimental data at a first temperature,
- obtaining a first value of a first dimension parameter from said at least two resonance frequencies at said first temperature,
- comparing said first value of said first dimension parameter at said first measurement temperature with a second value of said first dimension parameter at a second temperature,
- computing the thermal expansion parameter from said comparison.

Hereby the at least two resonance frequencies at the first temperature are material properties of the test piece, which can preferably be obtained via the acoustic measurement method described above and further in this document. The impact excitation measurement system as described above and further in this document, may preferably be used to obtain the at least two resonance frequencies.

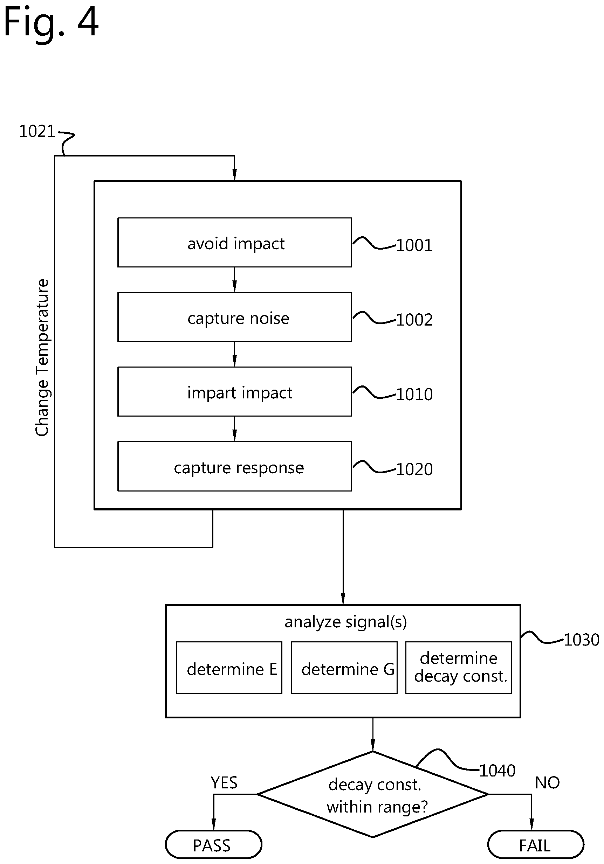

Figure 4 illustrates an embodiment of the method according to the present invention. In a first step a, the temperature is brought within a first temperature range (1021). Step b is then performed (1002) whereby care is taken that no impact is provided onto the test piece (1001), whereby preferably an impact system is actuated, but in such a way that impact is avoided. Step c is then performed whereby an impact is imparted onto the test piece (step c1, 1010) and the vibrational response signal is captured (step c2, 1020). The signals are then analysed (step d, 1030) whereby E, G, v and/or other properties (in particular also the decay constants) are obtained within the temperature range of step a. The impact-avoiding actuation step (1001), noise capturing step (1002), impact step (1010) and response capturing step (1020) may be performed repeatedly, before the signals are analyzed (1030) (as illustrated, for example when the apparatus has multiple impactors operated consecutively), or alternatively, each captured signal may be analyzed separately. Hereby, the noise signals and/or vibrational response signals at different temperatures or temperature ranges may be combined in the analysis of step d to obtain more accurate values for the material properties and/or to determine the temperature-dependence of these material properties.

Depending on the chosen excitation mode, the analyzing 1030 may further comprise determining a dynamic Young's modulus (E) or a shear modulus (G) from the frequencies in the spectrum of the response, in particular by identifying the peak frequency and applying a formula such as the ones provided above.

Preferably, the analyzing further comprises comparing 1040 the decay constants to reference values. This step allows the method according to the present invention to be used for quality control purposes. Indeed, a method of controlling a quality of an article of manufacture, comprises characterizing at least a part of the article of manufacture as said solid material sample using the method described above, signaling a "pass" condition 1040/YES if the decay constants are within a predetermined margin of said reference values; and declaring a "fail" condition 1040/NO if the decay constants are outside said predetermined margin of said reference values. Hence, according to an aspect of the present invention, there is provided a method of controlling a quality of an article of manufacture, the method comprising: characterizing at least a part of said article of manufacture as said test piece using the method as described above; signaling a "pass" condition if said decay constants are within a predetermined margin of said reference values; and declaring a "fail" condition if said decay constants are outside said predetermined margin of said reference values.

In an embodiment of the invention, the steps a to d are performed more than once, and preferably repetitively, at the same temperature, at different temperatures or within different temperature ranges. In a preferred embodiment, the test piece is heated up continuously, whereby the steps a-d are performed within subsequent temperature ranges.

For example, a test piece can be heated up continuously at a rate of 1°C/s, starting from room temperature (20°C). The steps a-d can then be performed regularly every 20s, which means that the first set of steps a-d are performed in the temperature range of 20 to 40°C, the second set of steps a-d are performed in the temperature range of 40 to 60°C, and further on up to e.g. a maximum temperature range of 1780 to 1800 °C. Note, however, that the temperature ranges do not need to be equally large, but may for instance be smaller for temperature ranges of interest. E.g. if one knows that the test piece or a component made from the same material as the test piece will be mainly used at temperatures between 700 and 800 °C, one could decide to measure the material properties more accurately between these temperatures by taking smaller temperature ranges, e.g. spanning 5 °C.

Further also note that the measurements performed in steps b and/or c, could be combined with measurements performed in steps b and/or c at other temperatures in order to obtain a more accurate noise signal and/or vibrational response signal. For instance, suppose one performs steps a-d in the temperature range 80 °C to 100 °C and also in the temperature range 100°C to 120°C. Hereby one could have executed step b the first time in a temperature sub-range of 82-87°C and the second time in a temperature subrange of 102-107°C, while step c could have been executed a first time in a subrange of 92-97°C. In such case, the analysis in step d could be performed taking into account the two noise signals obtained in the two times step b was performed. Hence, in a preferred embodiment, steps a, b, c and/or d are performed two times or more within a temperature range. Alternatively or additionally, steps a, b, c and/or d may be performed multiple times at different temperature ranges which may overlap.

In an embodiment, the control system comprises processing means configured to analyze the vibrational response signal by taking into account the noise signal to determine the material properties of the test piece.

Hereby the processing means may preferably be configured to subtract the noise signal from the vibrational response signal in the time domain or, more preferably, in the frequency domain by using a Fourier transform or a fast Fourier transform or a Harmonic decomposition to the captured signals. The subtraction may also be performed in a combination of the time domain and the frequency domain. The processing means is preferably configured to analyze the time-varying signal to determine the frequencies and decay constants of sinusoids making up the time-varying signal, i.e. it solves a harmonic inversion problem. The problem of a harmonic inversion, which more generally consists of determining frequencies, decay constants, amplitudes, and phases of the sinusoids making up a discrete-time, finite-length signal that consists of a sum of a finite number of such sinusoids in a given bandwidth, is well known in literature, but has not been associated with IET to date. Vladimir A. Mandelshtam and Howard S. Taylor have described the use of the general filter-diagonalization method of Wall and Neuhauser to solve this problem by recasting the harmonic inversion problem as the one of a small matrix diagonalization in their seminal paper "Harmonic inversion of time signals and its applications", The Journal of Chemical Physics 107, 6756 (1997). Computer-based implementations of this technique are known in the art, including the "Harminv" program by Steven G. Johnson of the Massachusetts Institute of Technology. The result of the analysis may be output to the screen 140 or to any other suitable interface for storage or further processing by other equipment.

The processing means may consist of one or more dedicated hardware components (e.g. ASIC), appropriately configured configurable hardware components (e.g. FPGA), microprocessors provided with suitable software, or a combination of the above. The same components may also perform other functions.

In a preferred embodiment of the present invention, the test piece is a workpiece, an apparatus or a component of an apparatus. In another preferred embodiment of the invention, the test piece comprises a well-defined shape, preferably a beam shape, and is made from the same material of, or using the same production technique of, a workpiece, an apparatus or a component of an apparatus.

## Claims

1. An impact excitation measurement system comprising a testing chamber, an impactor, a sensor system and a support system, wherein the impactor is configured to provide an impact to a test piece supported by the support system at said predetermined height, wherein the sensor system is configured to obtain a vibrational response of the test piece to an impact provided to the test piece by the impactor, wherein the support system is configured to support a solid test piece at a predetermined height within the testing chamber, wherein the support system comprises a set of support bars which are made of a thermally stable material, the set of support bars comprising at least three support bars each having a support end, which three support ends are positioned non-collinearly.

2. An impact excitation measurement system according to claim 1, wherein the support bars are made of the same material as the impactor.

3. An impact excitation measurement system comprising a testing chamber, an impactor, a sensor system and a support system, wherein the impactor is configured to provide an impact to a test piece supported by the support system at said predetermined height, wherein the sensor system is configured to obtain a vibrational response of the test piece to an impact provided to the test piece by the impactor, wherein the support system is configured to support a solid test piece at a predetermined height within the testing chamber, wherein the support bars are made of the same material as the impactor, the set of support bars comprising at least three support bars each having a support end onto which the piece can be supported, which three support ends are positioned non-collinearly.

4. An impact excitation measurement system according to any of the preceding claims, wherein the support ends comprise a point-like shape.

5. An impact excitation measurement system according to claim 4, wherein the support ends comprise a point-like shape which has the form of a spherical cap with a height (h) of at most 3 mm and a radius at the base of the cap (a) of at most 0.5 mm.

6. An impact excitation measurement system according to any of the preceding claims, wherein the testing chamber is a heating chamber comprising a temperature control system configured to control the temperature in the chamber.

7. An impact excitation measurement system according to any of the preceding claims, wherein the material comprises a linear expansion coefficient of at most $10.0 \times 10^{-6}$ K$^{-1}$.

8. A kit comprising an impact excitation measurement system according to any of the preceding claims and at least one test piece, wherein the test piece comprises a base surface, the base surface comprising a set of at least three non-collinear depressions, whereby the at least three non-collinear depressions are positioned in correspondence with the non-collinear support ends of the at least three support bars.

9. A kit according to claim 8, wherein the depressions are each positioned on a node of the test piece for a predetermined vibrational mode of the test piece.

10. A method for acoustically measuring material properties of a test piece, preferably at one or more temperatures, comprising the steps of:

    a. placing a test piece on the support system in a testing chamber of an impact excitation measurement system according to any of the claims 1 to 7;
    b. preferably performing a background measurement, preferably within said testing temperature range, by capturing a vibrational signal from the test piece within a calibration period, thereby obtaining a noise signal;
    c. performing an acoustic measurement on said test piece, preferably within said testing temperature range, within a testing period by:

        c1. imparting a vibrational excitation onto the test piece;
        c2. capturing a vibrational signal of the test piece within the testing period, thereby obtaining a vibrational response signal to said vibrational excitation, and

    d. obtaining the material properties of the test piece by analysing the vibrational response signal, preferably thereby taking into account the noise signal.

11. A method according to claim 10, comprising heating the test piece to within a testing temperature range.

# Fig. 1

# Fig. 2A

# Fig. 2B

# Fig. 3

305

310

303

306

301

307

310

311

308a

314

312

304

308b

302

309

315

312

317

318

319

313

316

or

380

pressure pulse

# Fig. 4

1021

Change Temperature

| avoid impact | 1001 |
| capture noise | 1002 |
| impart impact | 1010 |
| capture response | 1020 |

analyze signal(s) — 1030

| determine E | determine G | determine decay const. |

1040

YES — decay const. within range? — NO

PASS    FAIL

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

Application Number

EP 21 16 1386

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 636 881 A1 (ERLUS BAUSTOFFWERKE [DE]) 1 February 1995 (1995-02-01) | 3-5,10 | INV.<br>G01N3/34 |
| A | * column 2, line 28 - column 13, line 8; figures 1-6 * | 7-9 | G01N3/317<br>G01N29/04<br>G01N29/22 |
| X | JP S63 250548 A (OSAKA PREFECTURE) 18 October 1988 (1988-10-18) | 3,6,10, 11 | |
| A | * abstract; figures 1-3 * | 7-9 | |
| A | US 4 342 229 A (MASSA FRANK) 3 August 1982 (1982-08-03) * column 3, lines 11-22; figure 1 * | 3-11 | |
| A,D | WO 2020/254698 A1 (GRINDOSONIC BVBA [BE]) 24 December 2020 (2020-12-24) * the whole document * | 3-11 | |

TECHNICAL FIELDS
SEARCHED    (IPC)

G01N

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 18 November 2021 | Ionescu, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04E07)

Europäisches
Patentamt

European
Patent Office

Office européen
des brevets

**INCOMPLETE SEARCH
SHEET C**

Application Number

EP 21 16 1386

Claim(s) completely searchable:
       3-11

Claim(s) not searched:
       1, 2

Reason for the limitation of the search:

Rule 62a EPC

**ANNEX TO THE EUROPEAN SEARCH REPORT
ON EUROPEAN PATENT APPLICATION NO.**

EP 21 16 1386

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2021

| Patent document cited in search report | | Publication date | Patent family member(s) | | Publication date |
|---|---|---|---|---|---|
| EP 0636881 | A1 | 01-02-1995 | AT<br>EP<br>WO | 161958 T<br>0636881 A1<br>9503544 A1 | 15-01-1998<br>01-02-1995<br>02-02-1995 |
| JP S63250548 | A | 18-10-1988 | JP<br>JP | H0785047 B2<br>S63250548 A | 13-09-1995<br>18-10-1988 |
| US 4342229 | A | 03-08-1982 | NONE | | |
| WO 2020254698 | A1 | 24-12-2020 | EP<br>WO | 3754331 A1<br>2020254698 A1 | 23-12-2020<br>24-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019020825 A1
- WO 2020254698 A1
- US 6782970 B2

### Non-patent literature cited in the description

- **S-R.HUANG ; R.M.LERNER ; K.J.PARKER.** Time domain Doppler estimators of the amplitude of vibrating targets. *J. Acous. Soc. Am.,* 1992, vol. 91 (2), 965-974
- **J.TAPSON.** High precision, short range ultrasonic sensing by means of resonance mode-locking. *Ultrasonics,* 1995, vol. 33 (6), 441-444
- **R.KAZYS ; R. SLITERIS ; L. MAZEIKA.** Ultrasonic technique for Vibration Measurements. *Proceedings of the 15th World Conference on Non-Destructive Testing,* 15 October 2000, https://www.ndt.net/article/wcndt00/papers/idn246/idn246.htm
- Harmonic inversion of time signals and its applications. *The Journal of Chemical Physics,* 1997, vol. 107, 6756